# EUROPEAN PATENT SPECIFICATION

(11) **EP 2 465 361 B1**
(45) Date of publication and mention of the grant of the patent: **19.02.2014**
(21) Application number: 10195488.1
(22) Date of filing: 16.12.2010
(51) Int. Cl.: A23L 3/3463, A23L 3/3481, A23L 3/3517, A23L 3/3526, A23F 3/16, A23L 1/24, A23L 2/44

(54) **Method for inhibiting yeast activity**
Verfahren zur Hemmung der Hefeaktivität
Procédé pour inhiber l'activité de la levure

(43) Date of publication of application: 20.06.2012
(73) Proprietor: PURAC Biochem BV, 4206 AC Gorinchem (NL)
(72) Inventor: Heintz, Eelco Anthonius Johannes, 4201 GP, Gorinchem (NL); Kumar, Saurabh, 3311 RG Dordrecht (NL)
(74) Representative: van Heuvel, Margaretha

(56) References cited:
- WO-A1-03/034842
- WO-A1-2006/117029
- WO-A2-02/087328
- CA-A1- 2 700 633
- FR-A1- 2 634 627
- JP-A- 2003 088 345
- JP-A- 2010 124 821
- US-A1- 2008 193 616
- US-A1- 2010 284 985
- ALMAJANO ET AL: "Antioxidant and antimicrobial activities of tea infusions", FOOD CHEMISTRY, ELSEVIER LTD, NL, vol. 108, no. 1, 22 October 2007 (2007-10-22), pages 55-63, XP022411308, ISSN: 0308-8146, DOI: DOI:10.1016/J.FOODCHEM.2007.10.040

## Description

The present invention relates to a method for inhibiting yeast in acidic food, to a composition for addition to food and to an acidic food comprising said composition.

Yeasts make up a significant fraction of the microbial spoilage of food. Food safety and prevention of food spoilage is an ever present concern worldwide, particularly of acidic foods such as beverages, dairy products, ready to eat meals, soups or sauces, which account for an important part of the food industry. Spoilage of food is a major economic problem for the food manufacturer. There is also an increasing demand for healthy and all-natural foods that combine good taste with high quality. Food manufacturers need to protect the health and safety of the public whilst satisfying the consumer demands by delivering products that are safe to eat and that have a guaranteed shelf life, either at chilled or ambient temperature storage.

Acidic food is difficult to preserve as the possibilities in using preservative agents are limited. Only those agents are suited that can resist such an acidic environment in terms of preserving their stability and antimicrobial activity. This makes for example many proteins, amino acids and enzymes unsuited for use as preservative agents in acidic food.

Epigallocatechin gallate (EGCG) is a natural product present in green tea extract that is known for its beneficial physiological properties. EGCG and related chatechin derivatives have been described to act as anti-oxidants and as suppressors of the rise of blood pressure, blood sugar level and cholesterol level (EP 1 297 757).

Compositions comprising EGCG and/or closely related catechins have also been reported to have antimicrobial activity.

DE 199 17 836 describes citrus fruit based preservatives and mentions EGCG as one of the active flavonoid components that may be present in citric fruit extracts. This document further discloses that grape fruit extract compositions are active against several microbes *in vitro,* including gram-positive bacteria, gram-negative bacteria and yeasts.

WO 2006/117029 describes compositions comprising polylysine and polyhdroxyphenolic compounds for use against halitosis, which is predominantly caused by anaerobic bacteria. The polyhydroxyphenolic compound being green tea extract, which may comprise EGCG, or olive extract. The antibacterial activity of the compositions is assessed by measuring the decrease in the amount of anaerobic bacteria metabolites in the oral cavity after the usage of, for instance, a bucal spray formulation or mint tablets comprising polylysine and green tea extract as antibacterial components.

JP 11-292710 describes a germicide composition comprising alcohol, a natural extract, surfactant and water. The natural extract being selected from apple phenone, hinokitiol, polylysine and green tea extract. EGCG is mentioned as one of the catechins that may be contained in the green tea extract. The examples presented in the document show the activity of different compositions against gram-positive and gram-negative bacteria. JP 2003 088345 describes the use of an extract from Tencha (a kind of chinese herb tea which is different from green tea), also referred to as sweet tea, optionally with one type of amino acid, to improve the preservation of food.

WO 2009/031041 describes a composition comprising lauric arginate (LAE) or a derivative thereof as antimicrobial compound and an antimicrobial material which may be green tea extract. In this document the activity of the compositions against a range of different microbes is analysed in culture medium. In the examples presented where the activity against yeast is assessed, no inhibitory activity is observed for green tea extract, which presents a minimal inhibition concentration (MIC) above 10000 ppm, whereas LAE shows to inhibit the yeasts *Saccharomyces cerevisiae* and *Kluyveromyces marxianus* with a MIC of 24 and 7 ppm respectively. Further, no interaction in the inhibition of yeast is observed for a combination of LAE and green tea extract.

It has now been surprisingly found that EGCG in combination with a derivative of a basic amino acid, and/or a salt thereof, presents an excellent inhibitory activity against yeast in acidic food (i.e. food with a pH between 2 and 6).

The basic amino acid derivative is selected from the group consisting of a polymer of a basic amino acid and an ester of a basic amino acid alpha-amide.

EGCG and basic amino acid derivatives themselves are not known for having a high anti-yeast activity. The inventors have now surprisingly found that the combination of EGCG and a derivative of a basic amino acid acts as an effective anti-yeast agent in acidic food. Unexpectedly, the anti-yeast activity of the combination in acidic food is significantly higher than the sum of the activities of the compounds when used individually, probably owing to a synergistic effect of the combination against yeast.

Accordingly, in one aspect the instant invention relates to a method for controlling or preventing the growth of yeast in a food with a pH between 2 and 6 comprising adding to said food a combination of a) epigallocatechin gallate (EGCG) and b) a derivative of a basic amino acid selected from the group consisting of a polymer of a basic amino acid and an ester of a basic amino acid alpha-amide, and/or a salt thereof, as an anti-yeast agent.

The method as described herein not only uses all-natural compounds for controlling or preventing the growth of yeast in acidic food but also advantageously requires relatively low amounts of preservative (i.e. anti-yeast agent).

The food used, to which the anti-yeast combination as described herein is added, is an acidic food, which may be acidic by nature or may be acidified by addition of acidulants. Acidic food is food with a pH between 2 and 6, preferably between 3 and 5, more preferably between 3 and 3.5 and even more preferably about 3.2. The acidic food may be a solid food or a liquid food. Such acidic foods include for example beverages (such as soft-drinks, fruit or vegetable-based juices, beer, wine, milk and liquid yogurt), soups, dressings, sauces, purees, toppings, jams, dairy products, meat and fish products, refrigerated and high temperature-treated products and ready-to-eat meals.

The method as described herein uses a combination of a) EGCG and b) a derivative of a basic amino acid selected from the group consisting of a polymer of a basic amino acid and an ester of a basic amino acid alpha-amide, and/or a salt thereof, as an anti-yeast agent.

In the context of the subject application an anti-yeast agent is a combination of compounds that has anti-yeast activity, i.e. that inhibits the growth of yeasts and/or has a biocidal effect against yeasts. When applied to food the anti-yeast agent as described herein acts as a preservative by controlling or preventing the growth of yeast in the food. This results in a reduction or suppression of the presence in the food of yeasts and of toxic and/or food-spoiling compounds derived from the metabolic activity of yeasts. Thereby, the stability of the food is enhanced.

Component a) of the combination, Epigallocatechin gallate (EGCG), is a natural polyhydroxyphenolic compound, which is present in plant-derived extracts, for instance, in green tea extract. EGCG may be added to the acidic food in isolated form or being part of a green tea extract. Typically, a suitable green tea extract has a combination of acceptable sensory properties and solubility. Other sources of EGCG, such as citric fruit extract, may also be used. EGCG may be obtained commercially, may be extracted from natural sources according to methods known to the skilled person or may be prepared by synthetic routes.

Component b) of the combination is a derivative of a basic amino acid selected from the group consisting of a polymer of a basic amino acid and an ester of a basic amino acid alpha-amide, and/or a salt thereof.

The basic amino acid derivative may be added to the food as the free compound, as a salt or as a combination of the free compound and a salt. Any salts of the basic amino acid derivative which are adequate for addition to foods may be used, e.g. complying to GRAS (Generally Recognized as Safe, under the Code of Federal Regulations as 21 CFR 182). Suitable salts include, for example, the chloride salt, the bromide salt and the hydrogen sulphate salt.

Basic amino acids within the context of the present application are amino acids with an isoelectric point (pI) above 7. Preferred amino acids within the group of basic amino acids are the natural amino acids, i.e. the amino acids which occur in nature. They encompass lysine (pI is 9.74), arginine (pI is 10.76) and histidine (pI is 7,59). The use of derivatives of lysine and arginine is preferred.

Within the context of the present specification the term polymer of a basic amino acid encompasses polymers of 5-1000 monomers of basic amino acids including polylysine, polyarginine and polyhistidine. The degree of polymerisation may preferably vary between 5 and 500 monomers, more preferably between 5 and 100 and most preferably between 10 and 50 monomers. Polylysine is the homopolymer of L-lysine and is preferably used. Polylysine may be used as α-polylysine, ε-polylysine or a mixture thereof and is preferably used as ε-polylysine. ε-Polylysine preferably comprises 25 to 35 L-lysine monomers linked by the peptide bonds between the free carboxyl groups and the ε-amino groups. Polylysine is commercially available and is generally produced from aerobic bacterial fermentation.

Within the context of the present specification the term ester of a basic amino acid alpha-amide means a basic amino acid which, instead of a carboxylic acid group and an amino group, has an ester group and an amide group attached to the alpha carbon of the amino acid. The basic side chain of the amino acid being free or in the form of a salt. The salt form of such an ester of a basic amino acid alpha-amide has the following structure: 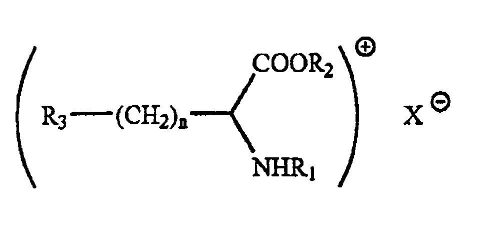 wherein X is a counter ion such as Br, Cl, or HSO₄; R1 is a linear alkyl chain having from 8 to 14 carbon atoms; R2 is an aromatic group or a linear or branched alkyl chain from 1 to 18 carbon atoms; and R3 is one of the following: 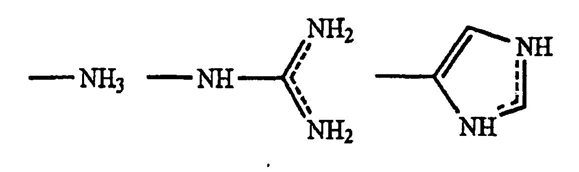 and n is from 0 to 4.

The ester of the basic amino acid alpha-amide is preferably an ester of an alpha-amide of arginine. A particular example of such an ester is lauric arginate. Lauric arginate is derived from lauric acid and arginine, in particular, the ethyl ester of the lauramide of the arginine monohydrochloride. Lauric arginate (also known as Minerat^{®}-N and lauramide arginine ethyl ester, i.e. LAE) may be synthesised from lauric acid, ethanol and L-arginine. LAE is commercially available in a range of concentrations, as powder bound on a maltodextrin carrier and as a solution of LAE monohydrochloride in propylene glycol which may be directly added to food.

The chemical structure of the chloride salt of LAE is as follows:

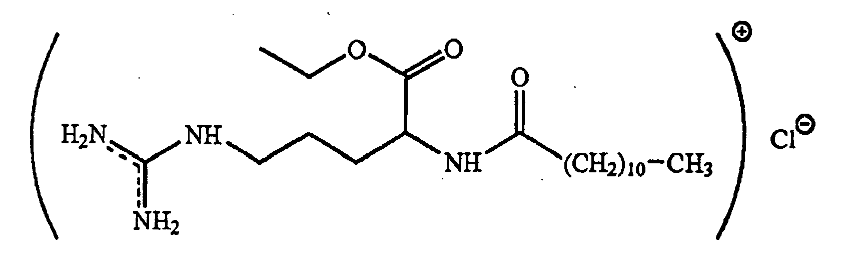

A combination of different basic amino acid derivatives may be used as component b). For instance, component b) may be a combination of different basic amino acid polymers, a combination of different basic amino acid alpha-amide esters, or a combination of a basic amino acid polymer and a basic amino acid alpha-amide ester.

Accordingly, EGCG may be used, for example, in combination with LAE, in combination with polylysine or in combination with both LAE and polylysine.

The method as described herein advantageously requires relatively low amounts of each of the a) and b) components having to be added to the acidic food.

The two components are added in amounts and in proportions sufficient to bring about yeast inhibition. To choose the optimal amounts and proportions of each of the components of the anti-yeast agent for a specific acidic food is well within the competences of the skilled person. The optimal amounts and proportions may be evaluated by for instance comparing the amount of yeast colony forming units (CFUs), by methods known to the skilled person, in acidic foods to which different combinations of EGCG and basic amino acid derivative are added.

EGCG may be generally added to the acidic food in a concentration between 0.0001 and 2 wt.%, preferably between 0.001 wt.% and 1 wt.%, more preferably between 0.01 wt.% and 0.5 wt.% and even more preferably between 0.01 wt.% and 0.1 wt.%.

The basic amino acid derivative may be generally added to the acidic food in a concentration between 0.00001 wt.% and 1 wt.%, preferably between 0.0001 wt.% and 0.1 wt.%, more preferably between 0.0005 wt.% and 0.01 wt.% and even more preferably between 0.001 wt.% and 0.005 wt.%. When a combination of different basic amino acid derivatives is used as component b) the concentration of the sum of the different basic amino acid derivatives (e.g. LAE and polylysine) is also generally between 0.00001 wt.% and 1 wt.%, preferably between 0.0001 wt.% and 0.1 wt.%, more preferably between 0.0005 wt.% and 0.01 wt.% and even more preferably between 0.001 wt.% and 0.005 wt.%.

The weight percentages refer to the weight of the active compound per total weight of the acidic food, the active compound being EGCG (and not green tea extract) and the basic amino acid derivative excluding the salt anion. The weight ratio in which the components a) and b) of the combination are added to the acidic food may be between 0.01a:1b and 5000a:1b, particularly between 5a:1b and 2000a:1b, preferably between 10a:1b and 1000a:1b, more preferably between 50a:1b and 500a:1b and even more preferably 100a:1b.

EGCG and the basic amino acid derivative may be added to the acidic food each individually or as a pre-mixture. Each of the components or the pre-mixture may be added in solid form (e.g. as a powder) or in liquid form (e.g. as a solution, a dispersion or a syrup). The anti-yeast agent may also be added to the food by means of a carrier. Suitable carriers include silica, cyclodextrin and/or maltodextrine. Generally, for liquid, granular or mashed foods, the addition is performed by mixing the anti-yeast agent with the acidic food. The anti-yeast agent may also be applied onto the surface of the food by for instance spraying.

Other additives may be also added to the acidic food either individually or pre-mixed with EGCG and/or the basic amino acid derivative. Preferred additives, which also show some enhancement of anti-yeast activity, include vanillin, cinnamon extract, mono- and/or diglycerides, hop extract, cinnamic acid or its salt, caproic acid, sodium hexametaphosphate, fatty acid lactylates (e.g. sodium caproyl lactylate and sodium lauroyl lactylate), sorbic acid or its salt, propionic acid or its salt and cultured sugar from Purac (e.g. PuraQ Verdad NV10 and PuraQ Verdad NV15, which consist of fermentation products of corn sugar such as sugars, organic acids, peptides and aromas). Other additives include, for instance, flavour enhancers, pH-regulators, anti-oxidants, emulsifiers and preservatives. Even though the method of the invention generally obviates the need of using further food-preservatives, they may be added if necessary.

In general it is preferred that all components added to the acidic food satisfy to GRAS. It is also preferred that the additives do not negatively affect the organoleptic quality of the acidic food in terms of e.g. taste, texture and colour.

The method as described herein is found to be very effective against yeasts that are commonly associated with food spoilage, such as Candida (e.g. *C*. *albicans*), Saccharomyces (e.g. *S. cere*visiae) and Zygosaccharomyces (e.g. *Z. bailii*).

In a further aspect, the present invention relates to a composition comprising epigallocatechin gallate (EGCG), lauric arginate (LAE) and polylysine for addition to food, and to an acidic food comprising EGCG, LAE and polylysine.

As described above the composition comprising a) EGCG and b) both LAE and polylysine may be effectively used according to the method described herein. Accordingly, the composition may comprise the components a) and b) in a weight ratio between 0.01a:1b and 5000a:1b, particularly between 5a:1b and 2000a:1b, preferably between 10a:1b and 1000a:1b, more preferably between 50a:1b and 500a:1b and even more preferably 100a:1b.

The acidic food comprising a) EGCG and b) both LAE and polylysine generally comprises a) in concentration of between 0.0001 wt.% and 2 wt.%, preferably between 0.001 wt.% and 1 wt.%, more preferably between 0.01 wt.% and 0.5 wt.% and even more preferably between 0.01 wt.% and 0.1 wt.% and b), i.e. the sum of LAE and polylysine, in a concentration between 0.00001 wt.% and 1 wt.%, preferably between 0.0001 wt.% and 0.1 wt.%, more preferably between 0.0005 wt.% and 0.01 wt.% and even more preferably between 0.001 wt.% and 0.005 wt.%.

The present invention is further illustrated by the following Examples, without being limited thereto or thereby.

### Example 1: Inhibition of yeasts.

The Green tea extract EGCG 50 with a 53 wt.% of EGCG, was purchased from Layn, Lijiang, China. ε-Polylysine (50 wt.% of polylysine) was purchased from Chisso, Japan. LAE, Minerat^{®}-N (40 wt.%) was purchased from Vedeqsa, Spain.

*Candida albicans* was isolated from a commercial beverage, *Saccharomyces cerevisiae* (CBS 2190) and Zygosaccharomyces *bailii* (CBS 6708) were obtained from CBS (Centraalbureau voor Schimmel-cultures).

### A) Determination of the minimal inhibitor concentration.

Yeast cultures were grown in liquid medium (per liter: 5 gram filtered Malt Extract from Oxoid Ltd., England, 40 gram glucose and 5 gram Bacto Peptone from Becton Dickinson, USA, at pH 3.5 prepared according to the manufacturer instructions) in screw-capped tubes for at least 48 hours at 25 °C.

For the determination of the MIC, liquid medium was prepared as described above with increasing amounts of inhibitor. 200 µl of each inhibitor-comprising medium was transferred to a panel of a sterile 96-well Microtiter plate. Completed well plates were stored at 4 °C until further use. For the inoculation of the inhibitor-containing liquid media 5 µl of a 72 to 84 hours grown culture was used. The optical density (OD) for every composition was measured 96 hours after inoculation. The MIC values obtained are shown in table 1.

**Table 1**

| Yeast | EGCG MIC (ppm) | ε-polylysine MIC (ppm) | LAE MIC (ppm) |
|---|---|---|---|
| *C. Albicans* | 9000 | >40* | >70* |
| *S. cerevisiae* | 5000 | 30-80 | 30-80 |
| *Z. bailii* | 2000 | >40* | >70* |

| | | | |
|---|---|---|---|
| * highest amount tested | | | |

### B) Combination tests.

Inhibition of yeast was evaluated for combinations of EGCG and polylysine or LAE.

Yeast cultures were grown in model beverage which contained per litter of demineralised water: 40 g of sucrose, 0.35 g of apple flavour (Givaudan), 8.3 g of apple juice concentrate (Gargill) and 1 g of citric acid. The pH was about 3.5. Cultures were grown in screw-capped tubes for at least 48 hours at 25 °C.

The tests combining two components were carried out in sterile 96-well Microtiter plates. Model beverage was prepared as described above with increasing amounts of two different inhibitors. The concentrations of each inhibitor were presented in 8 equal concentration steps that ranged from 0 to 1 - 2 times the estimated MIC value of particular yeast for a particular inhibitor. 200 µl of each medium was transferred to a panel of a sterile 96-well Microtiter plate. Completed well plates were stored at 4 °C until further use. For the inoculation of this test 5 µl of a 72 to 84 hours grown culture was used. The OD for every composition was measured 96 hours after inoculation. The results are shown in table 2.

**Table 2**

| Yeast | EGCG (wt.%) | ε-polylysine (wt.%) | LAE (wt.%) | Maximum OD |
|---|---|---|---|---|
| *C. Albicans* | - | - | - | 0.47* |
| *C. Albicans* | 0.07 | - | - | 0.40* |
| *C. Albicans* | - | - | 0.002 | 0.30 |
| *C. Albicans* | - | 0.0005 | - | 0.32 |
| *C. Albicans* | 0.07 | - | 0.002 | <0.05 |
| *C. Albicans* | 0.07 | 0.0005 | - | <0.05 |
| *Z. bailii* | - | - | - | 0.38* |
| *Z. bailii* | 0.07 | - | - | 0.28* |
| *Z. bailii* | - | - | 0.002 | 0.38 |
| *Z. bailii* | - | 0.0005 | - | 0.40 |
| *Z. bailii* | 0.07 | 0.0005 | - | <0.05 |
| *Z. bailii* | 0.07 | - | 0.002 | <0.05 |
| *S. cerevisiae* | - | - | - | 0.32* |
| *S. cerevisiae* | 0.07 | - | - | 0.28* |
| *S. cerevisiae* | - | - | 0.001 | 0.19 |
| *S. cerevisiae* | 0.07 | - | 0.001 | <0.05 |

| | | | | |
|---|---|---|---|---|
| * average of two experiments | | | | |

## Claims

1. A method for controlling or preventing the growth of yeast in a food having a pH between 2 and 6 comprising adding to said food a combination of a) epigallocatechin gallate (EGCG) and b) a derivative of a basic amino acid selected from the group consisting of a polymer of a basic amino acid and an ester of a basic amino acid alpha-amide, and/or a salt thereof, as an anti-yeast agent.

2. The method according to claim 1 wherein epigallocatechin gallate is added to the food as a green tea extract.

3. The method according to claim 1 or 2 wherein the polymer of a basic amino acid is polylysine.

4. The method according to claim 3 wherein the polylysine is ε-polylysine.

5. The method according to any one of the preceding claims wherein the ester of a basic amino acid alpha-amide is lauric arginate.

6. The method according to any one of the preceding claims wherein epigallocatechin gallate is added to the food in a concentration between 0.0001 wt.% and 2 wt.%, preferably between 0.001 wt.% and 1 wt.%, more preferably between 0.01 wt.% and 0.5 wt.% and even more preferably between 0.01 wt. % and 0.1 wt.%.

7. The method according to any one of the preceding claims wherein the derivative of a basic amino acid is added to the food in a concentration between 0.00001 wt.% and 1 wt.%, preferably between 0.0001 wt.% and 0.1 wt.%, more preferably between 0.0005 wt.% and 0.01 wt.% and even more. preferably between 0.001 wt.% and 0.005 wt.%.

8. The method according to any one of the preceding claims wherein the food has a ph between 3 and 5, preferably between 3 and 3.5 and more preferably about 3.2.

9. The method according to any one of the preceding claims wherein the food is a beverage.

10. The method according to any one of the preceding claims wherein the yeast is *Candida albicans, Saccharomyces cerevisiae* and/or *Zygosaccharomyces bailii.*

11. A composition for addition to a food comprising a) epigallocatechin gallate and b) both lauric arginate and polylysine.

12. The composition of claim 11 wherein the weight ratio between a) and b) is between 0.01a:1b and 5000a:1b, particularly between 5a:1b and 2000a:1b, preferably between 10a:1b and 1000a:1b, more preferably between 50a:1b and 500a:1b and even more preferably 100a:1b.

13. A food having a pH between 2 and 6 comprising a) epigallocatechin gallate and b) both lauric arginate and polylysine.

14. The food of claim 13 comprising a) in a concentration between 0.0001 wt.% and 2 wt.%, preferably between 0.001 wt.% and 1 wt.%, more preferably between 0.01 wt.% and 0.5 wt.% and even more preferably between 0.01 wt.% and 0.1 wt.% and b) in a concentration between 0.00001 wt.% and 1 wt.%, preferably between 0.0001 wt.% and 0.1 wt.%, more preferably between 0.0005 wt.% and 0.01 wt.% and even more preferably between 0.001 wt.% and 0.005 wt.%.

## Patentansprüche

1. Ein Verfahren zum Kontrollieren oder Verhindern von Hefewachstum in einem Nahrungsmittel mit einem pH-Wert zwischen 2 und 6, umfassend Zugeben einer Kombination aus a) Epigallocatechingallat (EGCG) und b) einem Derivat einer basischen Aminosäure, ausgewählt aus der Gruppe bestehend aus einem Polymer einer basischen Aminosäure und einem Ester eines basischen Aminosäure-alpha-amids und/oder eines Salzes davon, zu dem Nahrungsmittel als ein Anti-Hefemittel.

2. Das Verfahren gemäß Anspruch 1, wobei Epigallocatechingallat als ein Grünteeextrakt dem Nahrungsmittel zugegeben wird.

3. Das Verfahren gemäß Anspruch 1 oder 2, wobei das Polymer einer basischen Aminosäure Polylysin ist.

4. Das Verfahren gemäß Anspruch 3, wobei das Polylysin ε-Polylysin ist.

5. Das Verfahren gemäß einem der vorhergehenden Ansprüche, wobei der Ester eines basischen Aminosäure-alpha-amids Laurinarginat ist.

6. Das Verfahren gemäß einem der vorhergehenden Ansprüche, wobei Epigallocatechingallat in einer Konzentration zwischen 0,0001 Gew.-% und 2 Gew.-%, bevorzugt zwischen 0,001 Gew.-% und 1 Gew.-%, stärker bevorzugt zwischen 0,01 Gew.-% und 0,5 Gew.-% und noch stärker bevorzugt zwischen 0,01 Gew.-% und 0,1 Gew.-% dem Nahrungsmittel zugegeben wird.

7. Das Verfahren gemäß einem der vorhergehenden Ansprüche, wobei das Derivat einer basischen Aminosäure in einer Konzentration zwischen 0,00001 Gew.-% und 1 Gew.-%, bevorzugt zwischen 0,0001 Gew.-% und 0,1 Gew.-%, stärker bevorzugt zwischen 0,0005 Gew.-% und 0,01 Gew.-% und noch stärker bevorzugt zwischen 0,001 Gew.-% und 0,005 Gew.-% dem Nahrungsmittel zugegeben wird.

8. Das Verfahren gemäß einem der vorhergehenden Ansprüche, wobei das Nahrungsmittel einen pH-Wert zwischen 3 und 5, bevorzugt zwischen 3 und 3,5 und stärker bevorzugt von etwa 3,2 aufweist.

9. Das Verfahren gemäß einem der vorhergehenden Ansprüche, wobei das Nahrungsmittel ein Getränk ist.

10. Das Verfahren gemäß einem der vorhergehenden Ansprüche, wobei die Hefe *Candida albicans, Saccharomyces cerevisiae* und/oder *Zygosaccharomyces bailii* ist.

11. Eine Zusammensetzung für die Zugabe zu einem Nahrungsmittel, umfassend a) Epigallocatechingallat und b) sowohl Laurinarginat als auch Polylysin.

12. Die Zusammensetzung nach Anspruch 11, wobei das Gewichtsverhältnis zwischen a) und b) zwischen 0,01a: 1b und 5000a: 1b, insbesondere zwischen 5a: 1b und 2000a : 1b, bevorzugt zwischen 10a : 1b und 1000a : 1b, stärker bevorzugt zwischen 50a : 1b und 500a : 1b und noch stärker bevorzugt bei 100a : 1b liegt.

13. Ein Nahrungsmittel mit einem pH-Wert zwischen 2 und 6, umfassend a) Epigallocatechingallat und b) sowohl Laurinarginat als auch Polylysin.

14. Das Nahrungsmittel nach Anspruch 13, umfassend a) in einer Konzentration zwischen 0,0001 Gew.-% und 2 Gew.-%, bevorzugt zwischen 0,001 Gew.-% und 1 Gew.-%, stärker bevorzugt zwischen 0,01 Gew.-% und 0,5 Gew.-% und noch stärker bevorzugt zwischen 0,01 Gew.-% und 0,1 Gew.-%, und b) in einer Konzentration zwischen 0,00001 Gew.-% und 1 Gew.-%, bevorzugt zwischen 0,0001 Gew.-% und 0,1 Gew.-%, stärker bevorzugt zwischen 0,0005 Gew.-% und 0,01 Gew.-% und noch stärker bevorzugt zwischen 0,001 Gew.-% und 0,005 Gew.-%.

## Revendications

1. Procédé pour contrôler ou prévenir la croissance de levures dans un aliment ayant un pH entre 2 et 6 comprenant l'addition audit aliment d'une combinaison de a) gallate d'épigallocatéchine (EGCG) et b) d'un dérivé d'un acide aminé basique choisi dans le groupe constitué d'un polymère d'un acide aminé basique et d'un ester d'un acide aminé basique alpha amide, et/ou un sel de celui-ci, en tant qu'agent anti-levure.

2. Procédé selon la revendication 1 dans lequel le gallate d'épigallocatéchine est ajouté à l'aliment sous forme d'extrait de thé vert.

3. Procédé selon la revendication 1 ou 2 dans lequel le polymère d'un acide aminé basique est la polylysine.

4. Procédé selon la revendication 3 dans lequel la polylysine est la ε-polylysine.

5. Procédé selon l'une quelconque des revendications précédentes dans lequel l'ester d'un acide aminé basique alpha amide est l'arginate laurique.

6. Procédé selon l'une quelconque des revendications précédentes dans lequel le gallate d'épigallocatéchine est ajouté à l'aliment à une concentration entre 0,0001% en poids et 2% en poids, de préférence entre 0,001% en poids et 1% en poids, plus préférentiellement entre 0,01 % en poids et 0,5% en poids et tout préférentiellement entre 0,01 % en poids et 0,1 % en poids.

7. Procédé selon l'une quelconque des revendications précédentes dans lequel le dérivé d'un acide aminé basique est ajouté à l'aliment à une concentration entre 0,00001 % en poids et 1 % en poids, de préférence entre 0,0001 % en poids et 0,1% en poids, plus préférentiellement entre 0,0005% en poids et 0,01 % en poids et tout préférentiellement entre 0,001 % en poids et 0,005% en poids.

8. Procédé selon l'une quelconque des revendications précédentes dans lequel l'aliment a un pH entre 3 et 5, de préférence entre 3 et 3,5 et tout préférentiellement d'environ 3,2.

9. Procédé selon l'une quelconque des revendications précédentes dans lequel l'aliment est une boisson.

10. Procédé selon l'une quelconque des revendications précédentes dans lequel la levure est *Candida albicans, Saccharomyces cerevisiae* et/ou *Zygosaccharomyces bailli.*

11. Composition pour addition à un aliment comprenant a) le gallate d'épigallocatéchine et b) à la fois l'arginate laurique et la polylysine.

12. Composition selon la revendication 11 dans lequel le rapport pondéral entre a) et b) est entre 0,01 a:1b et 5000a:1b, en particulier entre 5a:1b et 2000a:1b, de préférence entre 10a:1b et 1000a:1b, plus préférentiellement entre 50a:1b et 500a:1 b et tout préférentiellement 100:1b.

13. Aliment ayant un pH entre 2 et 6 comprenant a) le gallate d'épigallocatéchine et b) à la fois l'arginate laurique et la polylysine.

14. Aliment selon la revendication 13 comprenant a) à une concentration entre 0,0001% en poids et 2% en poids, de préférence entre 0,001% en poids et 1% en poids, plus préférentiellement entre 0,01% en poids et 0,5% en poids et tout préférentiellement entre 0,01% en poids et 0,1% en poids et b) à une concentration entre 0,00001% en poids et 1% en poids, de préférence entre 0,0001% en poids et 0,1% en poids, plus préférentiellement entre 0,0005% et 0,01% en poids et encore plus préférentiellement entre 0,001 % en poids et 0,005% en poids.
